# EUROPEAN PATENT SPECIFICATION

(11) **EP 2 249 247 B1**
(45) Date of publication and mention of the grant of the patent: **04.10.2017**
(21) Application number: 08872196.4
(22) Date of filing: 21.11.2008
(51) Int. Cl.: G06F 9/44, H04L 29/06, H04L 12/24

(54) **DATA CONVERTING METHOD, DEVICE, TERMINAL AND SERVER**
DATENUMWANDLUNGSVERFAHREN, VORRICHTUNG, ENDGERÄT UND SERVER
PROCÉDÉ DE CONVERSION DE DONNÉES, DISPOSITIF, TERMINAL ET SERVEUR

(30) Priority: 02.02.2008 CN 200810026243
(43) Date of publication of application: 10.11.2010
(73) Proprietor: Huawei Technologies Co., Ltd., Longgang District Shenzhen, Guangdong 518129 (CN)
(72) Inventor: LIU, Haitao, Longgang District 518129 Shenzen (CN); WANG, Rui, Longgang District 518129 Shenzen (CN); SONG, Yue, Longgang District 518129 Shenzen (CN)
(74) Representative: Körber, Martin Hans
(86) International application number: PCT/CN2008/073153
(87) International publication number: WO 2009/097725

(56) References cited:
- EP-A1- 1 715 619
- EP-A2- 1 513 317
- CN-A- 1 606 308
- CN-A- 1 801 151
- CN-A- 101 101 551
- TELIASONERA: "Management Content Convergence ; OMA-CDM-2007-0023-INP_Management_Content", OMA-CDM-2007-0023-INP_MANAGEMENT_CONTENT, OPEN MOBILE ALLIANCE (OMA), 4330 LA JOLLA VILLAGE DR., SUITE 110 SAN DIEGO, CA 92122 ; USA , 4 October 2007 (2007-10-04), pages 1-5, XP064117913, Retrieved from the Internet: URL:ftp/Public_documents/TP/CDM/2007/ [retrieved on 2007-10-04]

## Description

### FIELD OF THE TECHNOLOGY

The present invention relates to a communications technology, and more particularly to a data converting method, a data converting device, a terminal, and a server.

### BACKGROUND OF THE INVENTION

An Open Mobile Alliance (OMA) Device Management (DM) implements settings of mobile device related parameters by using an OMA DM protocol. The parameters are organized through a tree structure with internal nodes and leaf nodes, are based on eXtensible Marked Language (XML), and comply with the XML Document Type Defined (DTD) of the OMA DM. A management tree is stored on a terminal device in the OMA DM structure. The management tree can be considered as an interface through which one device management server manages the terminal device through the DM protocol. Basic components of the management tree are nodes, which are classified into internal nodes and leaf nodes. The internal nodes may further have lower-level internal nodes and leaf nodes, while the leaf nodes do not have lower-level nodes any more. A Management Object (MO) serving as a sub-tree of the management tree is a set of nodes associated to realize a certain particular function.

In a general case, in a wireless environment, the OMA DM protocol is adopted for management, and the OMA DM data model is a treelike data model, while in a fixed network environment, a Customer premises equipment Wide Area Network (WAN) Management Protocol (CWMP) is adopted for management, and the CWMP data model is an object data model. With the development of wireless communications technologies, such as Wireless Fidelity (WIFI) and World Interoperability for Microwave Access (WIMAX), although the fixed networks provide a mobile function through a wireless channel, the service provision manner of the networks falls within a scope of the fixed network. When WIFI is converged with the wireless communications manners, such as, Wideband Code Division Multiple Access (WCDMA), generally an OMA DM server is adopted to manage a terminal. However, the OMA DM server manages a terminal device based on the OMA DM data model, so that the existing OMA DM server can not effectively manage a terminal device based on the CWMP data model in a network environment.
The document EP 1 513 317 A2 discloses an automatic algorithm to detect WAP CP XML represented vendor specific parameters to nodes under OMA DM. The algorithm converts an element of the WAP CP XML into an internal node within the OMA DM tree structure when the element corresponds to a characteristic element within the WAP CP XML, and converts the element into a leaf node within the OMA DM tree structure when the element corresponds to a parm element within the WAP CP XML.

The document EP 1 715 619 A1 shows a method and system of a generating MIB from WMI classes trough translating each WMI class into nodes in an OID structure.

Moreover, the document "management content convergence; OMA-CDM-2007-0023-INP_management_content" shows a system and method for device management using OMA DM management objects.

### SUMMARY OF THE INVENTION

The present invention is directed to a data converting method as claimed in claim 1, a data converting device as claimed in claim 8, a terminal as claimed in claim 10, and a server as claimed in claim 13, so that a server of data based on a treelike data model according to the Open Mobile Alliance Device Management protocol, OMA DM, manages a terminal of data based on an object data model according to the Customer Premises Wide area Management Protocol. In order to solve the technical problem, it is a first aspect of the present invention to provide a data converting method, which includes the following steps. Data of a terminal is acquired. A data model corresponding to the received data is confirmed to be an object data model according to the Customer Premises Wide area Management Protocol, CWMP. The data based on the object data model is converted into data based on a treelike data model according to the Open Mobile Alliance Device Management protocol, OMA DM.

It is a second aspect of the present invention to provide a data converting device, which includes an acquiring unit, a confirming unit, a data converting unit, and a sending unit.

The acquiring unit is configured to acquire data of a terminal.

The confirming unit is configured to confirm that a data model corresponding to the received data is an object data model according to the Customer Premises Wide area Management Protocol, CWMP.

The data converting unit is configured to convert the data based on the object data model into data based on a treelike data model according to the Open Mobile Alliance Device Management protocol, OMA DM.

The sending unit is configured to send the data based on the treelike data model to a server.

It is a third aspect of the present invention to provide a terminal, which includes a first data converting unit and a sending unit.

The first data converting unit is configured to convert data based on an object data model according to the Customer Premises Wide area Management Protocol, CWMP into data based on a treelike data model according to the Open Mobile Alliance Device

Management protocol, OMA DM.

The sending unit is configured to send the data based on the treelike data model to a server.

It is a fourth aspect of the present invention to provide a server, which includes an acquiring unit, a second data converting unit, and a management unit.

The acquiring unit is configured to acquire data from a terminal.

The second data converting unit is configured to convert data based on an object data model according to the Customer Premises Wide area Management Protocol, CWMP from the terminal into data based on a treelike data model according to the Open Mobile Alliance Device Management protocol, OMA DM.

The management unit is configured to manage the data based on the treelike data model.

According to the present invention, the data based on the object data model is converted into the data based on the treelike data model, so that a server of an OMA DM protocol can manage the terminal based on the object data model defined by a Digital Subscriber Line (DSL) forum. Preferred embodiments are covered by the dependent claims.

### BRIEF DESCRIPTION OF THE DRAWINGS

To illustrate the technical solution according to the embodiments of the present invention or in the prior art more clearly, the accompanying drawings for describing the embodiments or the prior art are given below.
FIG. 1 is a schematic flow chart of a data converting method according to a first embodiment;
FIG. 2 is a schematic flow chart of a data converting method according to a second embodiment;
FIG. 3 is a schematic structural view of data based on a treelike data model after data conversion according to an embodiment;
FIG. 4 is a schematic structural view of a data converting device according to an embodiment;
FIG. 5 is a schematic structural view of a data converting unit in a data converting device according to an embodiment;
FIG. 6 is a schematic structural view of a terminal according to an embodiment; and
FIG. 7 is a schematic structural view of a server according to an embodiment.

### DETAILED DESCRIPTION OF THE EMBODIMENTS

In order to make the objectives, technical solution and merits of the present invention clearer, a detailed description of the present invention is hereinafter given below with reference to accompanying drawings. It is an object of the present invention to provide a data converting method, which includes the following steps. Data of a terminal is acquired. A data model corresponding to the received data is confirmed to be an object data model. The data based on the object data model is converted into data based on a treelike data model. The present invention further provides a corresponding data converting device, a terminal, and a server.

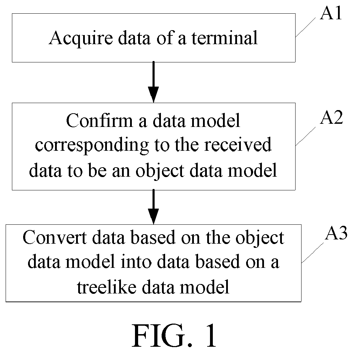

FIG. 1 is a schematic flow chart of a data converting method according to a first embodiment of the present invention. Referring to FIG. 1, the method includes the following steps.

In step A1, data of a terminal is acquired.

Here, the data of the terminal refers to a management operation instruction, a management operation object, and ordinary subscriber data, such as, an address book and a short message.

In step A2, a data model corresponding to the received data is confirmed to be an object data model.

Here, the received data is confirmed to be data based on a CWMP data model. In the CWMP, the data model includes two types of elements: object and parameter. The object may include other objects and parameters, while the parameter gives a specific parameter name and a parameter value. A "." is added behind an object name in the CWMP data model, and a lower level object is identified by cascading its own name behind a name of an upper-level object. The cascade of the object name is referred to as a full path name, and names are separated by the ".". However, names of all parameters do not have the ".". The object and the element can be effectively distinguished due to the difference, and a previous level object is determined according to the full path name of the object.

In step A3, the data based on the object data model is converted into data based on a treelike data model.

Here, different elements are processed based on the difference of the names of the object and the names of the parameter in the CWMP data model. The data based on the CWMP data model is converted into data based on an OMA DM data model. Basic components of the management tree in the OMA DM data model are nodes, which are classified into internal nodes and leaf nodes. The internal nodes may further have lower-level internal nodes and leaf nodes, while the leaf node does not have lower-level modes any more.

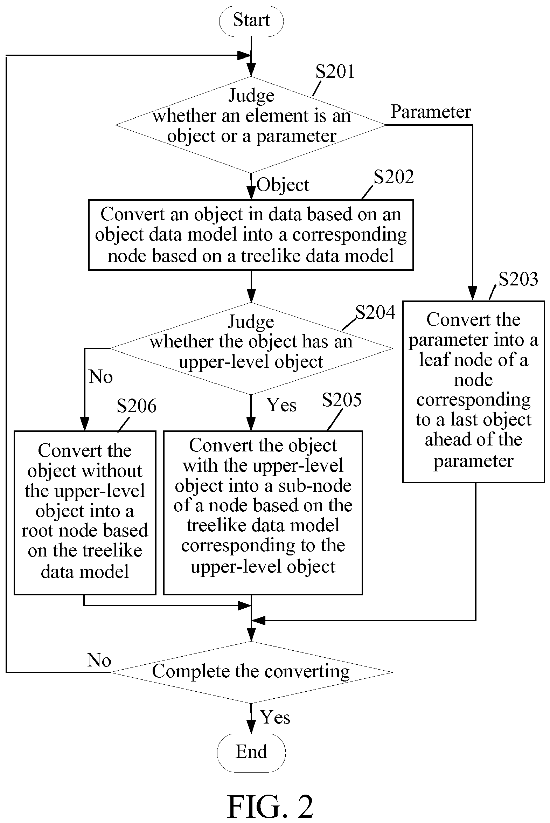

FIG. 2 is a schematic flow chart of a data converting method according to a second embodiment of the present invention. Referring to FIG. 2, the method is described in detail hereinafter.

In step S201, it is judged whether an element is an object or a parameter. If the element is the object, step S202 is executed. Otherwise, step S203 is executed.

Here, it is judged whether the element is the object or the parameter by using an element name in data based on a CWMP data model. A "." is added behind an object name in the CWMP data model, and a lower level object is identified by cascading its own name behind a name of an upper-level object. The cascade of the object name is referred to as a full path name, and names are separated by the ".". However, names of all parameters do not have the ".".

In step S202, an object in data based on an object data model is converted into a corresponding node based on a treelike data model.

In step S203, the parameter is converted into a leaf node of a node corresponding to a last object ahead of the parameter.

In step S204, it is judged whether the object has an upper-level object. If yes, step S205 is executed. Otherwise, step S206 is executed.

Here, according to the object name, it is judged whether the object has the upper-level object. A "." is added behind an object name in the CWMP data model, and a lower level object is identified by cascading its own name behind a name of an upper-level object. The cascade of the object name is referred to as a full path name, and names are separated by the ".". It is judged whether the object has the upper-level object through the full path name of the object.

In step S205, the element is converted into a sub-node of a node based on the treelike data model corresponding to the upper-level object.

Here, the process of converting the element into the sub-node of the node based on the treelike data model corresponding to the upper-level object includes the following steps. It is judged whether the node based on the treelike data model corresponding to the upper-level object exists. If the judging result is yes, the element is converted into the sub-node of the node based on the treelike data model corresponding to the upper-level object. If the judging result is no, firstly the upper-level object is converted into the node based on the treelike data model, and then the element is converted into the sub-node of the node based on the treelike data model corresponding to the upper-level object.

In step S206, the element is converted into a root node based on the treelike data model.

Here, if it is confirmed that the element does not have the upper-level object according to the full path name of the object, the element is converted into the root node based on the treelike data model.

One specific example of a method for converting from the data based on the CWMP data model to the data based on the OMA DM data model is described in the following. Received data information is a CWMP data configuration document of one actual Internet gateway device. Content of the configuration document is described in the following.

The CWMP configuration document:
InternetGatewayDevice.
DeviceSummary = "InternetGatewayDevice: 1.0[] (Baseline: 1),
ABCService: 1.0[1] (Baseline: 1),
XYZService: 1.0[1] (Baseline: 1)"
LANDeviceNumberOfEntries = 5
WANDeviceNumberOfEntries = 2
InternetGatewayDevice.DeviceInfo.
Manufacturer = "ABC Ltd"
ManufacturerOUI = AAAAAA
InternetGatewayDevice.DeviceInfo.VendorConfigFile.1.
Name = "Latest.cfg"
Version = 1.2
Date = 20051001T090909Z
Description = "Written by AAA"
InternetGatewayDevice.Layer3Forwarding.
DefaultConnectionService
="InternetGatewayDevice.WANDevice.1.WANConnectionDevice.2.WANPPPCon nection.1"
ForwardNumberOfEntries = 4

The description is given in the following.

InternetGatewayDevice. is an object type, which represents a gateway device.

DeviceSummary is a parameter type, and DeviceSummary = "InternetGatewayDevice: 1.0[] (Baseline: 1), ABC Service: 1.0 [1] (Baseline: 1), XYZService: 1.0 [1] (Baseline: 1) "refers to an object type supported by the gateway device.

LANDeviceNumberOfEntries is a parameter type, and LANDeviceNumberOfEntries = 5 means that the gateway device has five Local Area Network (LAN) devices.

WANDeviceNumberOfEntries is a parameter type, and WANDeviceNumberOfEntries = 2 means that a terminal device has two WAN devices.

InternetGatewayDevice.DeviceInfo. is an object type, which means that general device information is included.

Manufacturer = "ABC Ltd" refers to a manufacturer.

ManufacturerOUI = AAAAAA refers to a unique identification number of the manufacturer.

InternetGatewayDevice.DeviceInfo.VendorConfigFile.1. is an object type, which represents a specific configuration document of the manufacturer.

Name is a parameter type, and Name = "Latest.cfg" refers to a specific name of the configuration document.

Version is a parameter type, and Version = 1.2 refers to a specific version number of the configuration document.

Date is a parameter type, and Date = 20051001T090909Z refers to a specific date of the configuration document.

Description is a parameter type, and Description = "Written by AAA" refers to an author of the configuration document.

InternetGatewayDevice.Layer3Forwarding. is an object type, which represents one service defaulted in Layer 3.

DefaultConnectionService is a parameter type, and DefaultConnectionService = "InternetGatewayDevice.WANDevice.1.WANConnectionDevice.2.WANPPPConnection.1" refers to a connection of WAN PPP.

ForwardNumberOfEntries is a parameter type, and ForwardNumberOfEntries = 4 refers to four forwarded services.

The CWMP configuration document is the data based on the object data model, according to the element type in the data, the element is converted into the node corresponding to the treelike model.

In the CWMP configuration document, the element InternetGatewayDevice is an object, and does not have the upper-level object, so that the object InternetGatewayDevice is converted into a root node of the OMA DM data model. The following elements DeviceSummary, LANDeviceNumberOfEntries, and WANDeviceNumberOfEntries are parameters, and a last object ahead of them is the InternetGatewayDevice, so that the parameters DeviceSummary, LANDeviceNumberOfEntries, and WANDeviceNumberOfEntries are converted into leaf nodes of a node corresponding to the InternetGatewayDevice, and values of the parameters DeviceSummary, LANDeviceNumberOfEntries, and WANDeviceNumberOfEntries are assigned to the values of the corresponding leaf nodes after the parameters are converted. The element InternetGatewayDevice.DeviceInfo is an object, and it is a cascade of two names. The DeviceInfo has an upper-level object InternetGateway, and a node corresponding to the InternetGateway has been generated, so that the DeviceInfo is converted into a sub-node of the node corresponding to the InternetGatewayDevice. Because the DeviceInfo is not a parameter, it is not necessary to assign the value to the DeviceInfo. Both the elements Manufacturer and ManufacturerOUI are parameters, and a last object ahead of them is the DeviceInfo, so that the parameters Manufacturer and ManufacturerOUI are converted into leaf nodes of a node corresponding to the object DeviceInfo, and values of the parameters Manufacturer and ManufacturerOUI are assigned to the corresponding leaf nodes after the parameters are converted. The element InternetGatewayDevice.DeviceInfo.VendorConfigFile.1 is an object, and its name is a cascade of four names. An upper-level object of the "1" is the VendorConfigFile, and an upper-level object of the VendorConfigFile is the DeviceInfo, so that the VendorConfigFile is a sub-node of the DeviceInfo. Because the VendorConfigFile does not have the corresponding node yet, firstly a node corresponding to the VendorConfigFile is generated, and then the "1" is converted into a sub-node of the node corresponding to the VendorConfigFile. Because the "1" is not a parameter, it is not necessary to assign the value. The elements Name, Version, Date, and Description are all parameters, and a last object ahead of them is the "1", so that the parameters Name, Version, Date, and Description are converted into leaf nodes of a node corresponding to the object "1", and values of the parameters Name, Version, Date, and Description are assigned to the corresponding leaf nodes after the parameters are converted. The element InternetGatewayDevice.Layer3Forwarding is an object, and its name is a cascade of two names. An upper-level object of the Layer3Forwarding is the InternetGatewayDevice, and a node corresponding to the upper-level object InternetGatewayDevice has been generated, so that the Layer3Forwarding is converted into a sub-node of the InternetGatewayDevice. The elements DefaultConnectionService and ForwardNumberOfEntries are parameters, and a last object ahead of them is the object Layer3Forwarding, so that the parameters DefaultConnectionService and ForwardNumberOfEntries are converted into leaf nodes of a node corresponding to the Layer3Forwarding, and then values of the parameters DefaultConnectionService and ForwardNumberOfEntries are assigned to the corresponding leaf nodes after the parameters are converted. In a process of converting the object into the node, according to an association relation between the node and the object, a name of the node is nominated as a name of the object. In a process of converting the parameter into the leaf node, according to an association relation between the leaf node and the parameter, a name of the leaf node is nominated as a name of the parameter, and a value of the parameter is assigned to the leaf node corresponding to the parameter. The nomination method is convenient for a server of the OMA DM protocol to manage a terminal based on the object data model defined by the DSL forum, and the nomination method may also adopt a self-defined nomination manner. In a data converting method according to the embodiment of the present invention, the data configuration document of the actual Internet gateway device based on the CWMP data model is converted into the data based on the OMA DM data model, and the server manages the converted data configuration document of the actual Internet gateway device based on the treelike data model, so that the server of the OMA DM protocol can manage the terminal based on the object data model defined by the DSL forum.

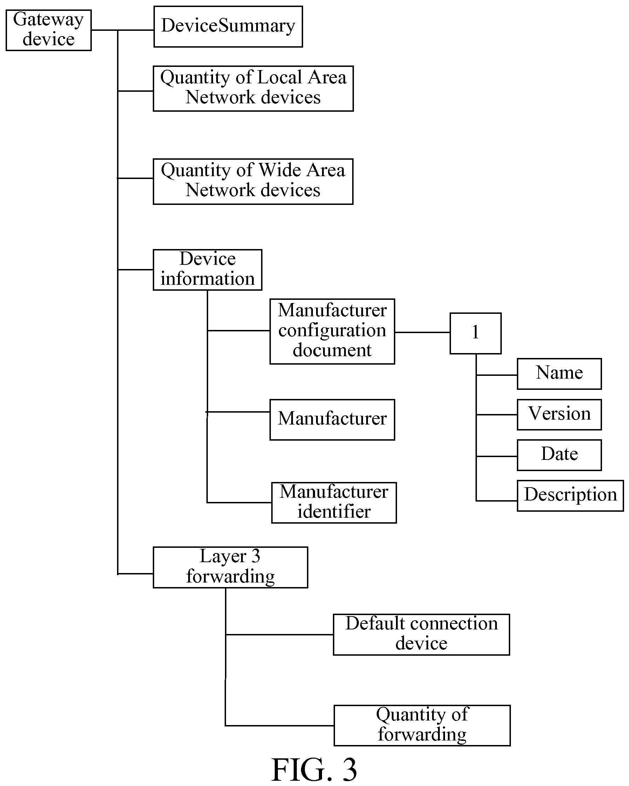

FIG. 3 is a schematic structural view of data based on a treelike data model after data conversion according to an embodiment of the present invention. Referring to FIG. 3, the converted CWMP configuration document is as shown in FIG. 3.

A data converting device, a terminal, and a server corresponding to the embodiments of the method are described in detail hereinafter.

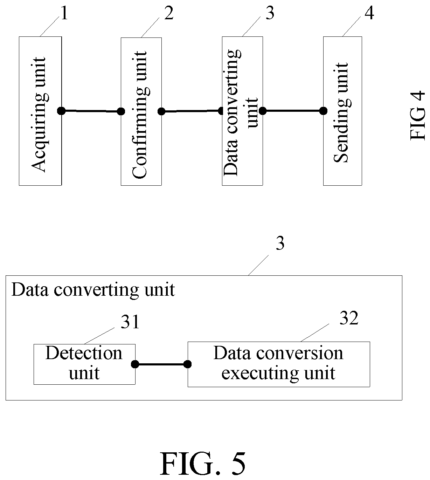

FIG. 4 is a schematic structural view of a data converting device according to an embodiment of the present invention. Here, the data converting device serves as an independent network element device. The network element device can be simultaneously corresponding to a plurality of terminals, and convert data based on an object data model from each terminal into data based on a treelike data model, so that a server of the OMA DM protocol can manage a terminal based on the object data model defined by the DSL forum. Definitely, the network element device may also be simultaneously corresponding to a plurality of OMA DM servers.

The data converting device includes an acquiring unit 1, a confirming unit 2, a data converting unit 3, and a sending unit 4.

The acquiring unit 1 is configured to acquire data of a terminal.

Here, the data of the terminal refers to a management operation instruction, a management operation object, and ordinary subscriber data, e.g., an address book and a short message.

The confirming unit 2 is configured to confirm that a data model corresponding to the received data is an object data model.

Here, according to a name of data of the object data model, the data model corresponding to the received data is confirmed to be the object data model.

The data converting unit 3 is configured to convert the data based on the object data model into data based on a treelike data model.

Here, the confirming unit 2 communicates with the data converting unit 3, and the data converting unit 3 converts the data based on the object data model confirmed by the confirming unit 2 into the data based on the treelike data model.

The sending unit 4 is configured to send the data based on the treelike data model to a server.

Here, the data based on the treelike data model is sent to the server, and the server manages the data based on the treelike data model.

FIG. 5 is a schematic structural view of a data converting unit in a data converting device according to an embodiment of the present invention. The data converting unit 3 includes a detection unit 31 and a data conversion executing unit 32.

The detection unit 31 is configured to detect a type of an element in data based on an object data model, and generate a corresponding detection result.

Here, it is detected whether the element is an object or a parameter by using an element name in data based on a CWMP data model. A "." is added behind an object name in the CWMP data model, and a lower level object is identified by cascading its own name behind a name of an upper-level object. The cascade of the object name is referred to as a full path name, and names are separated by the ".". However, names of all parameters do not have the ".".

The data conversion executing unit 32 is configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

Here, the process of converting the element in the data based on the object data model into the leaf node based on the treelike data model includes the following step. When the element in the data based on the object data model is identified to be a parameter, the parameter is converted into a leaf node of a node corresponding to a last object ahead of the parameter. The process of converting the element into the sub-node of the node based on the treelike data model corresponding to the upper-level object includes the following steps. It is judged whether the node based on the treelike data model corresponding to the upper-level object exists, if yes, the element is converted into the sub-node of the node based on the treelike data model corresponding to the upper-level object, and if not, firstly the upper-level object is converted into the node based on the treelike data model, and then the element is converted into the sub-node of the node based on the treelike data model corresponding to the upper-level object. In the process of converting the object into the node, according to an association relation between the node and the object, a name of the node is nominated as a name of the object. In the process of converting the parameter into the leaf node, according to an association relation between the leaf node and the parameter, a name of the leaf node is nominated as a name of the parameter, and a value of the parameter is assigned to the leaf node corresponding to the parameter.

The data converting device serves as an independent network element device. The network element device can be simultaneously corresponding to a plurality of terminals, convert the data based on the object data model from each terminal into data based on the treelike data model, and then send the data based on the treelike data model to a server, so that a server of the OMA DM protocol can manage a terminal based on the object data model defined by the DSL forum. Definitely, the network element device may also be simultaneously corresponding to a plurality of OMA DM servers.

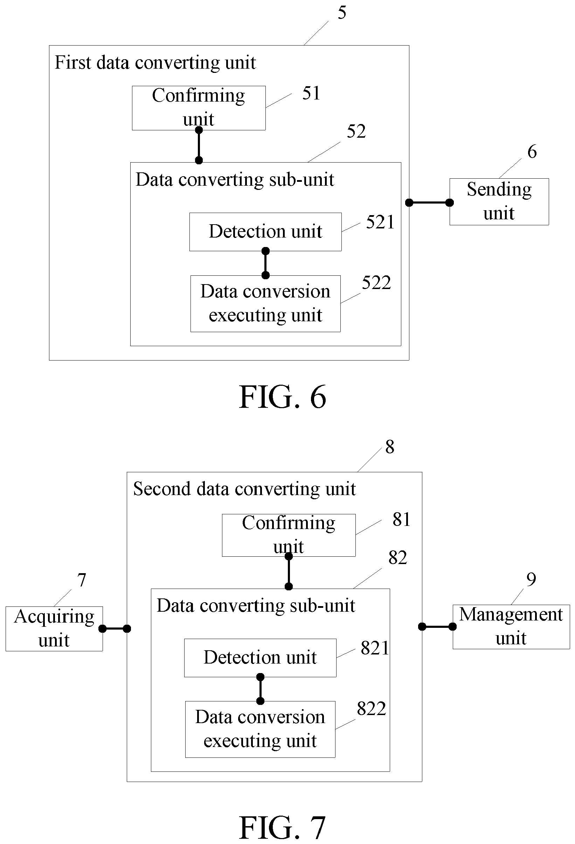

FIG. 6 is a schematic structural view of a terminal according to an embodiment of the present invention. The terminal includes a first data converting unit 5 and a sending unit 6.

The first data converting unit 5 is configured to convert data based on an object data model into data based on a treelike data model.

The first data converting unit 5 includes a confirming unit 51 and a data converting sub-unit 52.

The confirming unit 51 is configured to confirm that a data model corresponding to the received data is the object data model.

Here, according to a name of data of the object data model, the data model corresponding to the received data is confirmed to be the object data model.

The data converting sub-unit 52 is configured to convert the data based on the object data model into the data based on the treelike data model.

Here, the confirming unit 51 communicates with the data converting sub-unit 52, and the data converting sub-unit 52 converts the data based on the object data model confirmed by the confirming unit 51 into the data based on the treelike data model. The data converting sub-unit 52 includes a detection unit 521 and a data conversion executing unit 522.

The detection unit 521 is configured to detect a type of an element in the data based on the object data model, and generate a corresponding detection result.

Here, it is detected whether the element is an object or a parameter by using an element name in data based on a CWMP data model. A "." is added behind an object name in the CWMP data model, and a lower level object is identified by cascading its own name behind a name of an upper-level object. The cascade of the object name is referred to as a full path name, and names are separated by the ".". However, names of all parameters do not have the ".".

The data conversion executing unit 522 is configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

Here, the process of converting the element in the data based on the object data model into the leaf node based on the treelike data model includes the following step. When the element in the data based on the object data model is identified to be a parameter, the parameter is converted into a leaf node of a node corresponding to a last object ahead of the parameter. The process of converting the element into the sub-node of the node based on the treelike data model corresponding to the upper-level object includes the following steps. It is judged whether a node based on the treelike data model corresponding to the upper-level object exists, if yes, the element is converted into the sub-node of the node based on the treelike data model corresponding to the upper-level object, and if not, firstly the upper-level object is converted into the node based on the treelike data model, and then the element is converted into the sub-node of the node based on the treelike data model corresponding to the upper-level object. In the process of converting the object into the node, according to an association relation between the node and the object, a name of the node is nominated as a name of the object. In the process of converting the parameter into the leaf node, according to an association relation between the leaf node and the parameter, a name of the leaf node is nominated as a name of the parameter, and a value of the parameter is assigned to the leaf node corresponding to the parameter.

The sending unit 6 is configured to send the data based on the treelike data model to a server.

Here, the data based on the treelike data model is sent to the server. The server manages the data based on the treelike data model.

The first data converting unit is disposed in the terminal. The first data converting unit converts the data based on the object data model of the terminal into the data based on the treelike data model, and then sends the data based on the treelike data model to the server, so that a server of the OMA DM protocol can manage a terminal based on the object data model defined by the DSL forum.

FIG. 7 is a schematic structural view of a server according to an embodiment of the present invention. The server includes an acquiring unit 7, a second data converting unit 8, and a management unit 9.

The acquiring unit 7 is configured to acquire data from a terminal;

Here, the data of the terminal refers to a management operation instruction, a management operation object, and ordinary subscriber data, e.g., an address book and a short message.

The second data converting unit 8 is configured to convert data based on an object data model from the terminal into data based on a treelike data model.

The second data converting unit 8 includes a confirming unit 81 and a data converting sub-unit 82.

The confirming unit 81 is configured to confirm a data model corresponding to the data received by the acquiring unit 7 to be an object data model.

Here, according to a name of data of the object data model, it is confirmed that the data model corresponding to the received data to be the object data model.

The data converting sub-unit 82 is configured to convert the data based on the object data model into the data based on the treelike data model.

Here, the confirming unit 81 communicates with the data converting sub-unit 82, and the data converting sub-unit 82 converts the data based on the object data model confirmed by the confirming unit 81 into the data based on the treelike data model. The data converting sub-unit 82 includes a detection unit 821 and a data conversion executing unit 822.

The detection unit 821 is configured to detect a type of an element in the data based on the object data model, and generate a corresponding detection result.

Here, it is detected whether the element is an object or a parameter by means of an element name in data based on a CWMP data model. A "." is added behind an object name in the CWMP data model, and a lower level object is identified by cascading its own name behind a name of an upper-level object. The cascade of the object name is referred to as a full path name, and names are separated by the ".". However, names of all parameters do not have the ".".

The data conversion executing unit 822 is configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

Here, the process of converting the element in the data based on the object data model into the leaf node based on the treelike data model includes the following step. When the element in the data based on the object data model is identified to be a parameter, the parameter is converted into a leaf node of a node corresponding to a last object ahead of the parameter. The process of converting the element into the sub-node of the node based on the treelike data model corresponding to the upper-level object includes the following steps. It is judged whether a node based on the treelike data model corresponding to the upper-level object exists, if yes, the element is converted into the sub-node of the node based on the treelike data model corresponding to the upper-level object, and if not, firstly the upper-level object is converted into the node based on the treelike data model, and then the element is converted into the sub-node of the node based on the treelike data model corresponding to the upper-level object. In the process of converting the object into the node, according to an association relation between the node and the object, a name of the node is nominated as a name of the object. In the process of converting the parameter into the leaf node, according to an association relation between the leaf node and the parameter, a name of the leaf node is nominated as a name of the parameter, and a value of the parameter is assigned to the leaf node corresponding to the parameter.

The management unit 9 is configured to manage the data based on the treelike data model.

The second data converting unit is disposed in the server. The second data converting unit converts the data based on the object data model from the terminal into the data based on the treelike data model, so that a server of the OMA DM protocol can manage a terminal based on the object data model defined by the DSL forum.

A data converting method according to the embodiments of the present invention can be implemented through a program and related hardware. The program may be stored in a computer readable storage medium. The storage medium may be a Read-Only Memory (ROM), a Random Access Memory (RAM), a magnetic disk, or a Compact Disk Read-Only Memory (CD-ROM).

Through a data converting method, a data converting device, a terminal and a server as claimed in the appended claims, data based on a CWMP data model is converted into data based on an OMA DM data model, so that a server of the OMA DM protocol can manage a terminal based on an object data model defined by the DSL forum.

## Claims

1. A data converting method, comprising:
acquiring (A1) data of a terminal;
confirming (A2) that a data model corresponding to the received data is an object data model according to the Customer Premises Wide area Management Protocol, CWMP; and
converting (A3) the data based on the object data model into data based on a treelike data model according to the Open Mobile Alliance Device Management protocol, OMA DM.

2. The method according to claim 1, wherein after the converting the data based on the object data model into the data based on the treelike data model, the method further comprises:
sending the data based on the treelike data model to a server; or
managing the data based on the treelike data model.

3. The method according to claim 1 or 2, wherein the converting the data based on the object data model into the data based on the treelike data model comprises:
judging (S201) whether an element in the data based on the object data model is an object, if yes, converting (S202) the element in the data based on the object data model into a corresponding node based on the treelike data model, and if not, converting (S203) the element in the data based on the object data model into a leaf node based on the treelike data model.

4. The method according to claim 3, wherein the converting the element in the data based on the object data model into the corresponding node based on the treelike data model comprises:
judging (S204) whether the element has an upper-level object according to a name of the element in the data based on the object data model, if yes, converting (S205) the element into a sub-node of a node based on the treelike data model corresponding to the upper-level object, and if not, converting (S206) the element into a root node based on the treelike data model.

5. The method according to claim 4, wherein the converting (S205) the element into the sub-node of the node based on the treelike data model corresponding to the upper-level object comprises:
judging whether the node based on the treelike data model corresponding to the upper-level object exists, if yes, converting the element into the sub-node of the node based on the treelike data model corresponding to the upper-level object, and if not, firstly converting the upper-level object into the node based on the treelike data model, and then converting the element into the sub-node of the node based on the treelike data model corresponding to the upper-level object.

6. The method according to claim 3, wherein the converting (S202) the element in the data based on the object data model into the leaf node based on the treelike data model comprises:
converting a parameter into a leaf node of a node corresponding to a last object ahead of the parameter, when identifying the element in the data based on the object data model is the parameter.

7. The method according to any one of claims 4 to 6, further comprising:
using a name of the object as a name of the node according to an association relation between the node and the object, when converting the object into the node; and
using a name of the parameter as a name of the leaf node according to an association relation between the leaf node and the parameter, when converting the parameter into the leaf node, and assigning a value of the parameter to the leaf node corresponding to the parameter.

8. A data converting device, comprising:
an acquiring unit (1), configured to acquire data of a terminal;
a confirming unit (2), configured to confirm a data model, corresponding to the received data to be an object data model according to the Customer Premises Wide area Management Protocol, CWMP;
a data converting unit (3), configured to convert the data based on the object data model into data based on a treelike data model according to the Open Mobile Alliance Device Management protocol, OMA DM; and
a sending unit (4), configured to send the data based on the treelike data model to a server.

9. The data converting device according to claim 8, wherein the data converting unit (3) comprises:
a detection unit (31), configured to detect a type of an element in the data based on the object data model, and generate a corresponding detection result; and
a data conversion executing unit (32, configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

10. A terminal, comprising:
a first data converting unit (5), configured to convert data based on an object data model according to the Customer Premises Wide area Management Protocol, CWMP, into data based on a treelike data model according to the Open Mobile Alliance Device Management protocol, OMA DM; and
a sending unit (6), configured to send the data based on the treelike data model to a server.

11. The terminal according to claim 10, wherein the first data converting unit (5) comprises:
a confirming unit (51), configured to confirm a data model corresponding to the received data to be the object data model; and
a data converting sub-unit (52), configured to convert the data based on the object data model into the data based on the treelike data model.

12. The terminal according to claim 11, wherein the data converting sub-unit (52) comprises:
a detection unit (521), configured to detect a type of an element in the data based on the object data model, and generate a corresponding detection result; and
a data conversion executing unit (522), configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

13. A server, comprising:
an acquiring unit (7), configured to acquire data from a terminal;
a second data converting unit (8), configured to convert data based on an object data model according to the Customer Premises Wide area Management Protocol, CWMP, from the terminal into data based on a treelike data model according to the Open Mobile Alliance Device Management protocol, OMA DM; and
a management unit (9), configured to manage the data based on the treelike data model.

14. The server according to claim 13, wherein the second data converting unit comprises:
a confirming unit (81), configured to confirm a data model corresponding to the data received by the acquiring unit to be an object data model; and
a data converting sub-unit (82), configured to convert the data based on the object data model into the data based on the treelike data model.

15. The server according to claim 14, wherein the data converting sub-unit (82) comprises:
a detection unit (821), configured to detect a type of an element in the data based on the object data model, and generate a corresponding detection result; and
a data conversion executing unit (822), configured to convert a parameter into a leaf node based on the treelike data model when the detection result of the detection unit is that the element is the parameter; convert the element into a sub-node of a node based on the treelike data model corresponding to an upper-level object of an object when the detection result of the detection unit is that the element is the object, and the object has the upper-level object; and convert the element into a root node based on the treelike data model when the detection result of the detection unit is that the element is an object, and the object does not have the upper-level object.

## Patentansprüche

1. Datenumsetzungsverfahren, das Folgendes umfasst:
Erfassen (A1) von Daten eines Endgeräts;
Bestätigen (A2), dass ein Datenmodell, das den empfangenen Daten entspricht, ein Objektdatenmodell ist, das dem "Customer Premises Wide Area"-Managementprotokoll, CWMP, entspricht; und
Umsetzen (A3) der auf dem Objektdatenmodell beruhenden Daten in Daten, die auf einem baumähnlichen Datenmodell beruhen, das dem "Open Mobile Alliance Device"-Managementprotokoll, OMA DM, entspricht.

2. Verfahren nach Anspruch 1, wobei nach dem Umsetzen der auf dem Objektdatenmodell beruhenden Daten in die auf dem baumähnlichen Datenmodell beruhenden Daten das Verfahren ferner Folgendes umfasst:
Senden der auf dem baumähnlichen Datenmodell beruhenden Daten an einen Server; oder
Managen der auf dem baumähnlichen Datenmodell beruhenden Daten.

3. Verfahren nach Anspruch 1 oder 2, wobei das Umsetzen der auf dem Objektdatenmodell beruhenden Daten in die auf dem baumähnlichen Datenmodell beruhenden Daten Folgendes umfasst:
Beurteilen (S201), ob ein Element in den auf dem Objektdatenmodell beruhenden Daten ein Objekt ist, und wenn ja, Umsetzen (S202) des Elements in den auf dem Objektdatenmodell beruhenden Daten anhand des baumähnlichen Datenmodells in einen entsprechenden Knoten, und wenn nein, Umsetzen (S203) des Elements in den auf dem Objektdatenmodell beruhenden Daten anhand des baumähnlichen Datenmodells in einen Blattknoten.

4. Verfahren nach Anspruch 3, wobei das Umsetzen des Elements in den auf dem Objektdatenmodell beruhenden Daten anhand des baumähnlichen Datenmodells in den entsprechenden Knoten Folgendes umfasst:
Beurteilen (S204), ob das Element ein Objekt einer höheren Stufe besitzt, gemäß einem Namen des Elements in den auf dem Objektdatenmodell beruhenden Daten, und wenn ja, Umsetzen (S205) des Elements anhand des baumähnlichen Datenmodells in einen Unterknoten eines Knotens, der dem Objekt der höheren Stufe entspricht, und wenn nein, Umsetzen (S206) des Elements anhand des baumähnlichen Datenmodells in einen Wurzelknoten.

5. Verfahren nach Anspruch 4, wobei das Umsetzen (S205) des Elements anhand des baumähnlichen Datenmodells in den Unterknoten des Knotens, der der höheren Stufe des Objekts entspricht, Folgendes umfasst:
Beurteilen, ob der Knoten, der auf dem baumähnlichen Datenmodell beruht und der dem Objekt der höheren Stufe entspricht, existiert, und wenn ja, Umsetzen des Elements anhand des baumähnlichen Datenmodells in den Unterknoten des Knotens, der dem Objekt der höheren Stufe entspricht, und wenn nein, zuerst Umsetzen des Objekts der höheren Stufe anhand des baumähnlichen Datenmodells in den Knoten und dann Umsetzen des Elements anhand des baumähnlichen Datenmodells in den Unterknoten des Knotens, der dem Objekt der höheren Stufe entspricht.

6. Verfahren nach Anspruch 3, wobei das Umsetzen (S202) des Elements in den auf dem Objektdatenmodell beruhenden Daten anhand des baumähnlichen Datenmodells in den Blattknoten Folgendes umfasst:
Umsetzen eines Parameters in einen Blattknoten eines Knotens, der einem letzten Objekt vor dem Parameter entspricht, wenn identifiziert wird, dass das Element in den auf dem Objektdatenmodell beruhenden Daten der Parameter ist.

7. Verfahren nach einem der Ansprüche 4 bis 6, das ferner Folgendes umfasst:
Verwenden eines Namens des Objekts als einen Namen des Knotens gemäß einer Zuordnungsbeziehung zwischen dem Knoten und dem Objekt, wenn das Objekt in den Knoten umgesetzt wird; und
Verwenden eines Namens des Parameters als einen Namen des Blattknotens gemäß einer Zuordnungsbeziehung zwischen dem Blattknoten und dem Parameter, wenn der Parameter in den Blattknoten umgesetzt wird, und Zuweisen eines Werts des Parameters zu dem Blattknoten, der dem Parameter entspricht.

8. Datenumsetzungsvorrichtung, die Folgendes umfasst:
eine Erfassungseinheit (1), die konfiguriert ist, Daten eines Endgeräts zu erfassen;
eine Bestätigungseinheit (2), die konfiguriert ist, zu bestätigen, dass ein Datenmodell, das den empfangenen Daten entspricht, ein Objektdatenmodell ist, das dem "Customer Premises Wide Area"-Managementprotokoll, CWMP, entspricht;
eine Datenumsetzungseinheit (3), die konfiguriert ist, die auf dem Objektdatenmodell beruhenden Daten in Daten, die auf einem baumähnlichen Datenmodell beruhen, das dem "Open Mobile Alliance Device"-Managementprotokoll, OMA DM, entspricht, umzusetzen; und
eine Sendeeinheit (4), die konfiguriert ist, die auf dem baumähnlichen Datenmodell beruhenden Daten an einen Server zu senden.

9. Datenumsetzungsvorrichtung nach Anspruch 8, wobei die Datenumsetzungseinheit (3) Folgendes umfasst:
eine Detektionseinheit (31), die konfiguriert ist, einen Typ eines Elements in den auf dem Objektdatenmodell beruhenden Daten zu detektieren und ein entsprechendes Detektionsergebnis zu erzeugen; und
eine Datenumsetzungsausführungseinheit (32), die konfiguriert ist, einen Parameter anhand des baumähnlichen Datenmodells in einen Blattknoten umzusetzen, wenn das Detektionsergebnis der Detektionseinheit ist, dass das Element der Parameter ist; das Element in einen Unterknoten eines Knotens, der einem Objekt einer höheren Stufe eines Objekts entspricht, anhand des baumähnlichen Datenmodells umzusetzen, wenn das Detektionsergebnis der Detektionseinheit ist, dass das Element das Objekt ist und das Objekt das Objekt der höheren Stufe besitzt; und das Element anhand des baumähnlichen Datenmodells in einen Wurzelknoten umzusetzen, wenn das Detektionsergebnis der Detektionseinheit ist, dass das Element ein Objekt ist und das Objekt das Objekt der höheren Stufe nicht besitzt.

10. Endgerät, das Folgendes umfasst:
eine erste Datenumsetzungseinheit (5), die konfiguriert ist, Daten, die auf einem Objektdatenmodell beruhen, das dem "Customer Premises Wide Area"-Managementprotokoll, CWMP, entspricht, in Daten, die auf einem baumähnlichen Datenmodell beruhen, das dem "Open Mobile Alliance Device"-Managementprotokoll, OMA DM, entspricht, umzusetzen; und
eine Sendeeinheit (6), die konfiguriert ist, die auf dem baumähnlichen Datenmodell beruhenden Daten an einen Server zu senden.

11. Endgerät nach Anspruch 10, wobei die erste Datenumsetzungseinheit (5) Folgendes umfasst:
eine Bestätigungseinheit (51), die konfiguriert ist, zu bestätigen, dass ein Datenmodell, das den empfangenen Daten entspricht, das Objektdatenmodell ist; und
eine Datenumsetzungsuntereinheit (52), die konfiguriert ist, die auf dem Objektdatenmodell beruhenden Daten in die auf dem baumähnlichen Datenmodell beruhenden Daten umzusetzen.

12. Endgerät nach Anspruch 11, wobei die Datenumsetzungsuntereinheit (52) Folgendes umfasst:
eine Detektionseinheit (521), die konfiguriert ist, einen Typ eines Elements in den auf dem Objektdatenmodell beruhenden Daten zu detektieren und ein entsprechendes Detektionsergebnis zu erzeugen; und
eine Datenumsetzungsausführungseinheit (522), die konfiguriert ist, einen Parameter anhand des baumähnlichen Datenmodells in einen Blattknoten umzusetzen, wenn das Detektionsergebnis der Detektionseinheit ist, dass das Element der Parameter ist; das Element anhand des baumähnlichen Datenmodells in einen Unterknoten eines Knotens, der einem Objekt einer höheren Stufe eines Objekts entspricht, wenn das Detektionsergebnis der Detektionseinheit ist, dass das Element das Objekt ist und das Objekt das Objekt der höheren Stufe besitzt; und das Element anhand des baumähnlichen Datenmodells in einen Wurzelknoten umzusetzen, wenn das Detektionsergebnis der Detektionseinheit ist, dass das Element ein Objekt ist und das Objekt das Objekt der höheren Stufe nicht besitzt.

13. Server, der Folgendes umfasst:
eine Erfassungseinheit (7), die konfiguriert ist, Daten von einem Endgerät zu erfassen;
eine zweite Datenumsetzungseinheit (8), die konfiguriert ist, Daten, die auf einem Objektdatenmodell beruhen, das dem "Customer Premises Wide Area"-Managementprotokoll, CWMP, entspricht, von dem Endgerät in Daten, die auf einem baumähnlichen Datenmodell beruhen, das dem "Open Mobile Alliance Device"-Managementprotokoll, OMA DM, entspricht, umzusetzen; und
eine Managementeinheit (9), die konfiguriert ist, die auf dem baumähnlichen Datenmodell beruhenden Daten zu managen.

14. Server nach Anspruch 13, wobei die zweite Datenumsetzungseinheit Folgendes umfasst:
eine Bestätigungseinheit (81), die konfiguriert ist, zu bestätigen, dass ein Datenmodell, das den durch die Erfassungseinheit empfangenen Daten entspricht, ein Objektdatenmodell ist; und
eine Datenumsetzungsuntereinheit (82), die konfiguriert ist, die auf dem Objektdatenmodell beruhenden Daten in die auf dem baumähnlichen Datenmodell beruhenden Daten umzusetzen.

15. Server nach Anspruch 14, wobei die Datenumsetzungsuntereinheit (82) Folgendes umfasst:
eine Detektionseinheit (821), die konfiguriert ist, einen Typ eines Elements in den auf dem Objektdatenmodell beruhenden Daten zu detektieren und ein entsprechendes Detektionsergebnis zu erzeugen; und
eine Datenumsetzungsausführungseinheit (822), die konfiguriert ist, einen Parameter anhand des baumähnlichen Datenmodells in einen Blattknoten umzusetzen, wenn das Detektionsergebnis der Detektionsseinheit ist, dass das Element der Parameter ist;
das Element anhand des baumähnlichen Datenmodells in einen Unterknoten eines Knotens umzusetzen, der einem Objekt einer höheren Stufe eines Objekts entspricht, wenn das Detektionsergebnis der Detektionseinheit ist, dass das Element das Objekt ist und das Objekt das Objekt der höheren Stufe besitzt; und das Element anhand des baumähnlichen Datenmodells in einen Wurzelknoten umzusetzen, wenn das Detektionsergebnis der Detektionseinheit ist, dass das Element ein Objekt ist und das Objekt das Objekt der höheren Stufe nicht besitzt.

## Revendications

1. Procédé de conversion de données, comprenant:
l'acquisition (A1) de données d'un terminal ;
la confirmation (A2) qu'un modèle de données correspondant aux données reçues est un modèle de données d'objet conformément au protocole CWMP (Customer Premises Wide area Management Protocol) ; et
la conversion (A3) des données basées sur le modèle de données d'objet en données basées sur un modèle de données arborescent conformément au protocole OMA DM (Open mobile Alliance Device Management).

2. Procédé selon la revendication 1, après la conversion des données basées sur le modèle de données d'objet en les données basées sur le modèle de données arborescent, le procédé comprenant en outre :
l'envoi des données basées sur le modèle de données arborescent à un serveur ; ou
la gestion des données basées sur le modèle de données arborescent.

3. Procédé selon la revendication 1 ou 2, dans lequel la conversion des données basées sur le modèle de données d'objet en les données basées sur le modèle de données arborescent comprend :
le jugement (S201) qu'un élément dans les données basées sur le modèle de données d'objet est ou non un objet, dans l'affirmative, la conversion (S202) de l'élément dans les données basées sur le modèle de données d'objet en un noeud correspondant basé sur le modèle de données arborescent, et dans la négative, la conversion (S203) de l'élément dans les données basées sur le modèle de données d'objet en un noeud feuille basé sur le modèle de données arborescent.

4. Procédé selon la revendication 3, dans lequel la conversion de l'élément dans les données basées sur le modèle de données d'objet en le noeud correspondant basé sur le modèle de données arborescent comprend :
le jugement (S204) que l'élément a ou non un objet de niveau supérieur en fonction d'un nom de l'élément dans les données basées sur le modèle de données d'objet, dans l'affirmative, la conversion (S205) de l'élément en un sous-noeud d'un noeud basé sur le modèle de données arborescent correspondant à l'objet de niveau supérieur, et dans la négative, la conversion (S206) de l'élément en un noeud racine basé sur le modèle de données arborescent.

5. Procédé selon la revendication 4, dans lequel la conversion (S205) de l'élément en le sous-noeud du noeud basé sur le modèle de données arborescent correspondant à l'objet de niveau supérieur comprend :
le jugement que le noeud basé sur le modèle de données arborescent correspondant à l'objet de niveau supérieur existe ou non, dans l'affirmative, la conversion de l'élément en le sous-noeud du noeud basé sur le modèle de données arborescent correspondant à l'objet de niveau supérieur, et dans la négative, tout d'abord la conversion de l'objet de niveau supérieur en le noeud basé sur le modèle de données arborescent, puis la conversion de l'élément en le sous-noeud du noeud basé sur le modèle de données arborescent correspondant à l'objet de niveau supérieur.

6. Procédé selon la revendication 3, dans lequel la conversion (S202) de l'élément dans les données basées sur le modèle de données d'objet en le noeud feuille basé sur le modèle de données arborescent comprend :
la conversion d'un paramètre en un noeud feuille d'un noeud correspondant à un dernier objet devant le paramètre, quand l'identification de l'élément dans les données basées sur le modèle de données d'objet est le paramètre.

7. Procédé selon l'une quelconque des revendications 4 à 6, comprenant en outre :
l'utilisation d'un nom de l'objet comme nom du noeud conformément à une relation d'association entre le noeud et l'objet, lors de la conversion de l'objet en le noeud; et
l'utilisation d'un nom du paramètre comme nom du noeud feuille conformément à une relation d'association entre le noeud feuille et le paramètre, lors de la conversion du paramètre en le noeud feuille, et l'assignation d'une valeur du paramètre au noeud feuille correspondant au paramètre.

8. Dispositif de conversion de données, comprenant :
une unité d'acquisition (1), configurée pour acquérir des données d'un terminal;
une unité de confirmation (2), configurée pour confirmer qu'un modèle de données correspondant aux données reçues est un modèle de données d'objet conformément au protocole CWMP (Customer Premises Wide area Management Protocol) ; et
une unité de conversion de données (3), configurée pour convertir les données basées sur le modèle de données d'objet en données basées sur un modèle de données arborescent conformément au protocole OMA DM (Open mobile Alliance Device Management) ; et
une unité d'envoi (4), configurée pour envoyer les données basées sur le modèle de données arborescent à un serveur.

9. Dispositif de conversion de données selon la revendication 8, dans lequel l'unité de conversion de données (3) comprend :
une unité de détection (31), configurée pour détecter un type d'un élément dans les données basées sur le modèle de données d'objet, et générer un résultat de détection correspondant ; et
une unité d'exécution de conversion de données (32), configurée pour convertir un paramètre en un noeud feuille basé sur le modèle de données arborescent quand le résultat de détection de l'unité de détection est que l'élément est le paramètre ;
convertir l'élément en un sous-noeud d'un noeud basé sur le modèle de données arborescent correspondant à un objet de niveau supérieur d'un objet quand le résultat de détection de l'unité de détection est que l'élément est l'objet, et que l'objet a l'objet de niveau supérieur ; et convertir l'élément en un noeud racine basé sur le modèle de données arborescent quand le résultat de détection de l'unité de détection est que l'élément est un objet, et que l'objet n'a pas l'objet de niveau supérieur.

10. Terminal, comprenant :
une première unité de conversion de données (5), configurée pour convertir des données basées sur un modèle de données d'objet conformément au protocole CWMP (Customer Premises Wide area Management Protocol) en données basées sur un modèle de données arborescent conformément au protocole OMA DM (Open mobile Alliance Device Management) ; et
une unité d'envoi (6), configurée pour envoyer les données basées sur le modèle de données arborescent à un serveur.

11. Terminal selon la revendication 10, dans lequel la première unité de conversion de données (5) comprend :
une unité de confirmation (51), configurée pour confirmer qu'un modèle de données correspondant aux données reçues est le modèle de données d'objet ; et
une sous-unité de conversion de données (52), configurée pour convertir les données basées sur le modèle de données d'objet en les données basées sur le modèle de données arborescent.

12. Terminal selon la revendication 11, dans lequel la sous-unité de conversion de données (52) comprend :
une unité de détection (521), configurée pour détecter un type d'un élément dans les données basées sur le modèle de données d'objet, et générer un résultat de détection correspondant ; et
une unité d'exécution de conversion de données (522), configurée pour convertir un paramètre en un noeud feuille basé sur le modèle de données arborescent quand le
résultat de détection de l'unité de détection est que l'élément est le paramètre ;
convertir l'élément en un sous-noeud d'un noeud basé sur le modèle de données arborescent correspondant à un objet de niveau supérieur d'un objet quand le résultat de détection de l'unité de détection est que l'élément est l'objet, et que l'objet a l'objet de niveau supérieur ; et convertir l'élément en un noeud racine basé sur le modèle de données arborescent quand le résultat de détection de l'unité de détection est que l'élément est un objet, et que l'objet n'a pas l'objet de niveau supérieur.

13. Serveur, comprenant:
une unité d'acquisition (7), configurée pour acquérir des données depuis un terminal ;
une seconde unité de conversion de données (8), configurée pour convertir des données basées sur un modèle de données d'objet conformément au protocole CWMP (Customer Premises Wide area Management Protocol), provenant du terminal en données basées sur un modèle de données arborescent conformément au protocole OMA DM (Open mobile Alliance Device Management) ; et
une unité de gestion (9), configurée pour gérer les données basées sur le modèle de données arborescent.

14. Serveur selon la revendication 13, dans lequel la seconde unité de conversion de données comprend:
une unité de confirmation (81), configurée pour confirmer qu'un modèle de données correspondant aux données reçues par l'unité d'acquisition est un modèle de données d'objet ; et
une sous-unité de conversion de données (82), configurée pour convertir les données basées sur le modèle de données d'objet en les données basées sur le modèle de données arborescent.

15. Serveur selon la revendication 14, dans lequel la sous-unité de conversion de données (82) comprend :
une unité de détection (821), configurée pour détecter un type d'un élément dans les données basées sur le modèle de données d'objet, et générer un résultat de détection correspondant ; et
une unité d'exécution de conversion de données (822), configurée pour convertir un paramètre en un noeud feuille basé sur le modèle de données arborescent quand le résultat de détection de l'unité de détection est que l'élément est le paramètre ;
convertir l'élément en un sous-noeud d'un noeud basé sur le modèle de données arborescent correspondant à un objet de niveau supérieur d'un objet quand le résultat de détection de l'unité de détection est que l'élément est l'objet, et que l'objet a l'objet de niveau supérieur ; et convertir l'élément en un noeud racine basé sur le modèle de données arborescent quand le résultat de détection de l'unité de détection est que l'élément est un objet, et que l'objet n'a pas l'objet de niveau supérieur.
